# EUROPÄISCHE PATENTANMELDUNG

(11) **EP 0 640 502 A1**
(43) Veröffentlichungstag der Anmeldung: **01.03.1995**
(21) Anmeldenummer: 94110783.1
(22) Anmeldetag: 12.07.1994
(51) Int. Cl.: B60D 1/07

(54) **Kupplungs-Wechselsystem**

(30) Priorität: 26.08.1993 DE 9312800 U
(71) Anmelder: ORIS FAHRZEUGTEILE HANS RIEHLE GmbH, D-71693 Möglingen (DE)
(72) Erfinder: Riehle, Dipl.-Ing. Hans, D-71638 Ludwigsburg (DE)

(57) **Zusammenfassung**

Die Erfindung bezieht sich auf eine Vorrichtung (Kupplungs-Wechselsystem) für Zugfahrzeuge, die durch einfache Bedienung wahlweise Kupplungskugel- und Maulkupplungsbetrieb (4) ermöglicht, wobei die Kupplungskugel (3) fest mit der Halterung am Zugfahrzeug verbunden und die Maulkupplung mittels Adapter auf die Kupplungskugel aufsteckbar ist.

## Beschreibung

Die Vorrichtung dient zum Anordnen eines Kupplungsmaules einer Maulkupplung an einer aus Kugelhals mit Kupplungskugel bestehenden Anhängevorrichtung.

Aus der Praxis heraus, z.B. bei der Arbeit auf Baustellen o.dgl., entstand die Aufgabe, mit einem Fahrzeug, das mit einer aus Kugelhals mit Kupplungskugel bestehenden Anhängevorrichtung versehen ist, ein fahrbares Gerät zu ziehen, das an einer Deichsel eine Anhängeöse für eine Maulkupplung aufweist. Zur Lösung dieser Aufgabe sieht die Erfindung zum Anschrauben des Kupplungsmaules eine Platte vor, die einerseits mit einer Aufnahme für die Kupplungskugel und andererseits mit den Kugelhals seitlich umgreifenden Haltearmen ausgestattet ist, die durch einen durch eine Bohrung im Kugelhals eingesetzten Bolzen miteinander verbunden sind.

Wenn ein Kupplungsmaul einer Maulkupplung an die Platte mit der Aufnahme für die Kupplungskugel und mit den Haltearmen angeschraubt ist, wird es im Bedarfsfalle möglich, bei Mangel eines Zugfahrzeuges mit Maulkupplung ein Zugfahrzeug mit Kugelhals und Kupplungskugel als Anhängevorrichtung zu verwenden, wobei lediglich die Aufnahme auf die Kupplungskugel aufgesetzt zu werden braucht und die Haltearme am Kugelhals mit dem Bolzen zu sichern sind. Die Platte mit Aufnahme und Haltearmen stellt dabei einen Adapter dar, der es vorteilhaft ermöglicht, daß ein bestimmtes vormontiertes Kupplungssystem schnell zu einem anderen Kupplungssystem umgewandelt werden kann.

In Ausgestaltung des Gegenstandes der Erfindung kann die Aufnahme für die Kupplungskugel in einfacher Weise aus einer zylindrischen Halterung bestehen. Vorteilhaft können die Haltearme mit ebenen Flächen an entsprechenden Flächen am Kugelhals anlegen, so daß ein Verdrehen des Adapters und damit des Kupplungsmaules um die Hochachse durch die Kupplungskugel verhindert wird.

An der Aufnahme kann ein Federstecker angelenkt sein, mit dem der Bolzen für die Haltearme gesichert werden kann. Besonders vorteilhaft kann die Platte zum Anschrauben des Kupplungsmaules mit Gewindebohrungen derart versehen sein, daß eine Höhenverstellung des Kupplungsmaules möglich ist. Ferner kann die Aufnahme aus einem Zylinder bestehen, der mit einem Deckel von oben an der Kupplungskugel anliegt.

In der Zeichnung ist der Gegenstand der Erfindung in einem Ausführungsbeispiel dargestellt. Es zeigen:

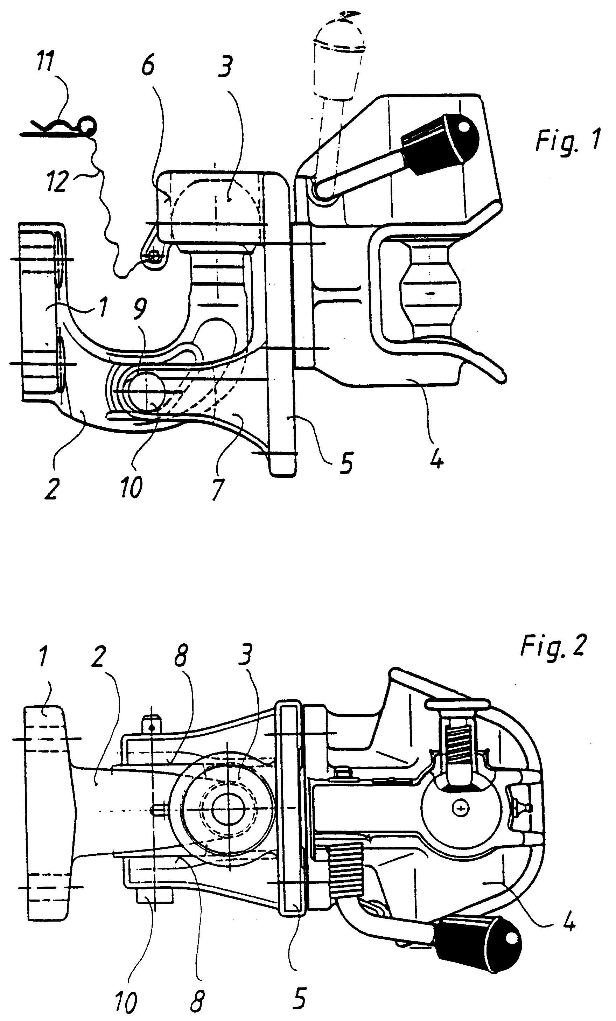

- Fig. 1:: eine Ansicht von der Seite auf eine Anhängevorrichtung mit Kugelhals und Kupplungskugel mit angesetztem Kupplungsmaul
und
- Fig. 2: eine Draufsicht auf die Vorrichtung nach Fig. 1

Am Heck eines Zugfahrzeuges ist mit der Platte 1 ein Kugelhals 2 mit Kupplungskugel 3 als Anhängevorrichtung angeordnet. Damit mit dieser Vorrichtung im Bedarfsfalle auch ein Anhänger o.dgl. gezogen werden kann, der an seiner Deichsel eine Anhängeöse für eine Maulkupplung aufweist, ist an einem Kupplungsmaul 4 eine Platte 5 festgeschraubt, die zur Halterung an der Anhängevorrichtung mit Kugelhals und Kupplungskugel, eine Aufnahme 6 in Form eines Zylinders und darunter Haltearme 7 aufweist, die den Kugelhals 2 umgreifen und mit ebenen Flächen 8 an entsprechenden Flächen am Kugelhals anliegen. In eine Bohrung 9, die durch die Haltearme 7 und den Kugelhals führt, ist ein Bolzen 10 eingesetzt, der durch einen Federstecker 11 gesichert ist. Mittels einer Kette 12 o.dgl. wird der Federstecker an der Aufnahme 6 festgehalten.

## Patentansprüche

1. Vorrichtung zum Anordnen eines Kupplungsmaules einer Maulkupplung an einer aus Kugelhals mit Kupplungskugel bestehenden Anhängevorrichtung, dadurch gekennzeichnet, daß zum Anschrauben des Kupplungsmaules (4) eine Platte (5) vorgesehen ist, die einerseits mit einer Aufnahme (6) für die Kupplungskugel (3) und andererseits mit den Kugelhals (2) seitlich umgreifenden Haltearmen (7) ausgestattet ist, die durch einen durch eine Bohrung (9) im Kugelhals (2) eingesetzten Bolzen (10) miteinander verbunden sind.

2. Vorrichtung nach Anspruch 1, dadurch gekennzeichnet, daß die Aufnahme (6) für die Kupplungskugel (3) aus einem zylindrischen Haltering besteht.

3. Vorrichtung nach den Ansprüchen 1 und 2, dadurch gekennzeichnet, daß die Haltearme (7) mit ebenen Flächen (8) an entsprechenden Flächen am Kugelhals (2) anliegen.

4. Vorrichtung nach den Ansprüchen 1 bis 3, dadurch gekennzeichnet, daß an der Aufnahme (6) für die Kupplungskugel (3) ein Federstecker (11) angelenkt ist, mit dem der Bolzen (10) für die Haltearme (7) gesichert werden kann.

5. Vorrichtung nach den Ansprüchen 1 bis 4, dadurch gekennzeichnet, daß die Platte (5) zum Anschrauben des Kupplungsmaules (4) mit Gewindebohrungen derart versehen ist, daß eine Höhenverstellung des Kupplungsmaules möglich ist.

6. Vorrichtung nach den Ansprüchen 1 und 3 bis 5, dadurch gekennzeichnet, daß die Aufnahme (6) aus einem Zylinder besteht, der mit einem Deckel von oben an der Kupplungskugel (3) anliegt.
